# EUROPEAN PATENT APPLICATION

(11) **EP 1 517 468 A2**
(43) Date of publication of application: **23.03.2005**
(21) Application number: 04019291.6
(22) Date of filing: 13.08.2004
(51) Int. Cl.: H04L 1/18, H04L 1/16

(54) **Status report missing detection in a communication system**

(30) Priority: 14.09.2003 US 481374 P
(71) Applicant: ASUSTeK Computer Inc., Peitou, Taipei City (TW)
(72) Inventor: Jiang, Sam Shiaw-Shiang, Hsin-Chu City, Taiwan (CN)
(74) Representative: Urner, Peter, Dipl.-Phys.

(57) **Abstract**

A method to detect a lost status report determines that a second status report is required when an AMD PDU not negatively acknowledged in the first status report, an AMD PDU with a polling bit set, or the last negatively acknowledged AMD PDU is received after the expiry of a roundtrip timer and before all the negatively acknowledged AMD PDUs in the first status report are received. The method provides a deterministic way of detecting a lost status report, resulting in improved transmission throughput in a wireless communications system.

## Description

### Cross Reference To Related Applications

This application claims the benefit of U.S. Provisional Application No. 60/481,374, filed 09/14/2003, entitled "STATUS REPORT MISSING DETECTION FOR ACKNOWLEDGED MODE" and included herein by reference.

### Background of Invention

### 1. Field of the Invention

The present invention relates to wireless communications systems, and more specifically, to methods for packet-based communication in such systems.

### 2. Description of the Prior Art

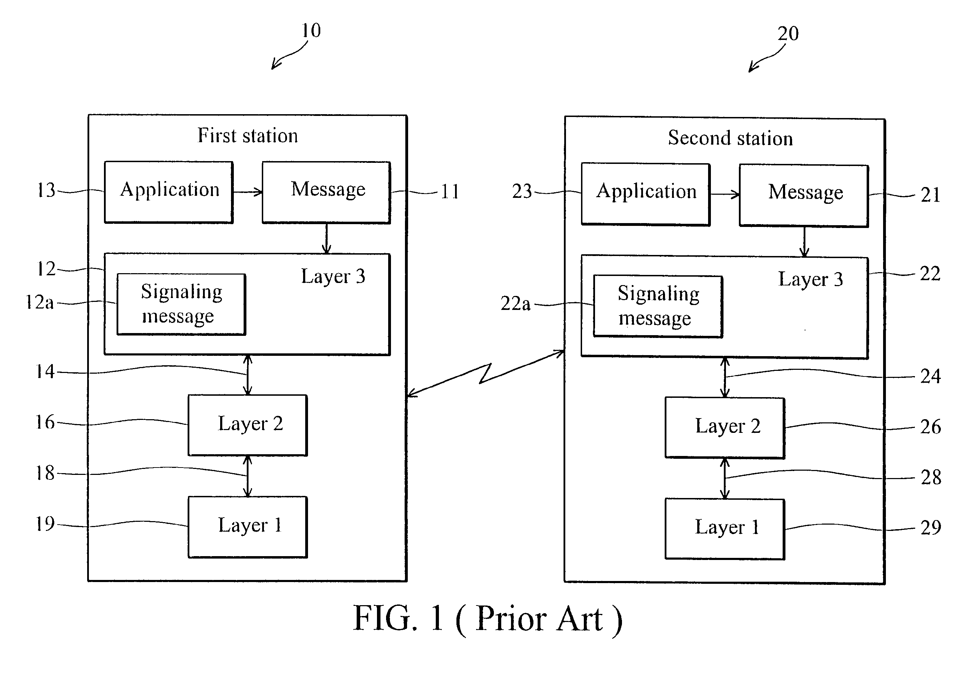

The surge in public demand for wireless communication devices has placed pressure upon industry to develop increasingly sophisticated communications standards. The 3rd Generation Partnership Project (3GPP™) is an example of such a new communications protocol. Such standards may utilize a three-layer approach to communications. Please refer to Fig.1. Fig.1 is a block diagram of three layers in such a communications protocol. In a typical wireless environment, a first station 10 is in wireless communications with one or more second stations 20. An application 13 on the first station 10 composes a message 11 and has it delivered to the second station 20 by handing the message 11 to a layer 3 interface 12. Besides being used as a transmission and reception interface for the application 13, the layer 3 interface 12 may also generate layer 3 signaling messages 12a for the purpose of controlling layer 3 operations between the first station 10 and the second station 20. An example of such a layer 3 signaling message is a request for ciphering key changes, which are generated by the layer 3 interfaces 12 and 22 of both the first and the second stations, respectively. The layer 3 interface 12 delivers either the message 11 or the layer 3 signaling message 12a to a layer 2 interface 16 in the form of layer 2 service data units (SDUs) 14. The layer 2 SDUs 14 may be of any length, and have an internal format that is dictated by the layer 3 interfaces 12 and 22. The layer 2 interface 16 composes the SDUs 14 into one or more layer 2 protocol data units (PDUs) 18. Each layer 2 PDU 18 is of a fixed length, and has an internal structure that is dictated by the layer 2 interfaces 16 and 26. The layer 2 PDUs 18 are then passed on to a layer 1 interface 19. The layer 1 interface 19 is the physical layer, transmitting data to the second station 20. The transmitted data is received by the layer 1 interface 29 of the second station 20 and reconstructed into one or more PDUs 28, which are passed up to the layer 2 interface 26. The layer 2 interface 26 receives the PDUs 28 and builds up one or more layer 2 SDUs 24. The layer 2 SDUs 24 are passed up to the layer 3 interface 22. The layer 3 interface 22, in turn, converts the layer 2 SDUs 24 back into either a message 21, which should be identical to the original message 11 that was generated by the application 13 on the first station 10, or a layer 3 signaling message 22a, which should be identical to the original signaling message 12a generated by the layer 3 interface 12 and which is then processed by the layer 3 interface 22. The received message 21 is passed to an application 23 on the second station 20.

Generally speaking, each layer in the transmitting first station 10 adds information to carry the message 11 and any appended data from the upper layers. For example, the layer 3 interface 12 packs the application message 11 into one or more layer 2 SDUs 14. Each layer 2 SDU will not only include data from the message 11, but will also include internal information that is required by the layer 3 interfaces 12 and 22. The layer 2 interface 16, in a similar manner, packs the layer 2 SDUs 14 into layer 2 PDUs 18, each of which also has additional information required by the layer 2 interfaces 16 and 26. On the receiving end at the second station 20, each layer removes the added information particular to that layer, and passes the remainder up to the upper layer. Thus, the layer 2 interface 26 unpacks the layer 2 SDUs 24 from the received stream of layer 2 PDUs 28, and passes only the layer 2 SDUs 24 up to the layer 3 interface 22. Similarly, the layer 3 interface 22 unpacks the message 21 from the layer 2 SDUs 24, passing only the complete message data 21 to the application 23. As a note regarding terminology used throughout this disclosure, a PDU is a data unit that is used by a layer internally to transmit and receive information, whereas an SDU is a data unit that is passed up to, or received from, an upper layer. Thus, a layer 3 PDU is exactly the same as a layer 2 SDU. Similarly, a layer 2 PDU could also be termed a layer 1 SDU. For purposes of the following disclosure, the shortened term "SDU" is used to indicate layer 2 SDUs (that is, layer 3 PDUs), and the term "PDU" should be understood as layer 2 PDUs (i.e., layer 1 SDUs).

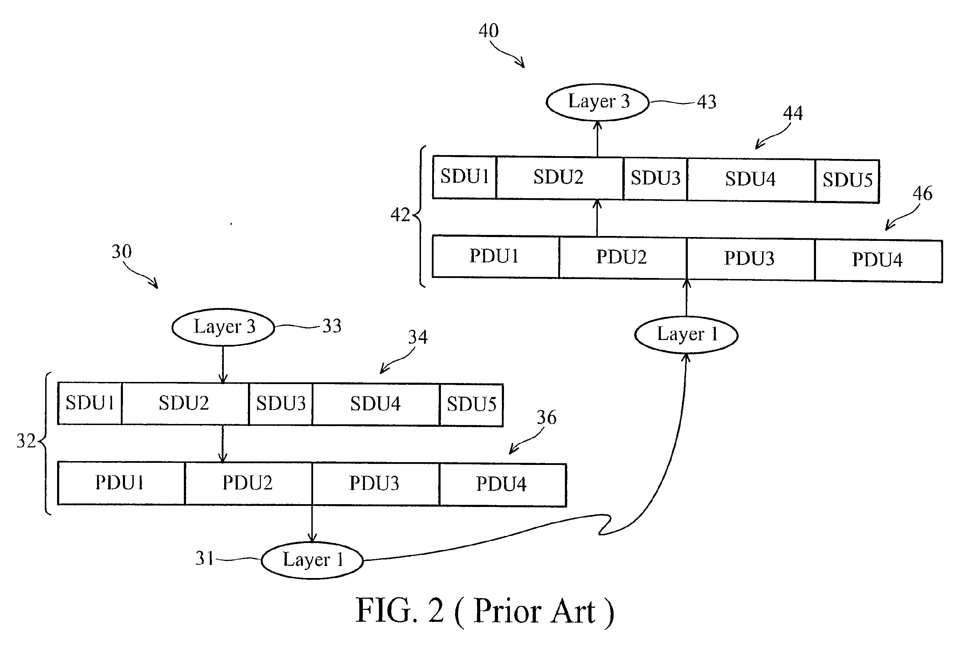

Of particular interest are the layer 2 and layer 3 interfaces 12, 16 and 22 which act as buffers between the relatively high-end data transmission and reception requests of the applications 13 and 23, and the low-level requirements of the physical transmission and reception process at the layer 1 interfaces 19 and 29. Please refer to Fig.2. Fig.2 is a diagram of a transmission/reception process from a layer 2 perspective. A layer 2 interface 32 of a transmitter 30, which may be either a base station or a mobile unit, receives a string of layer 2 SDUs 34 from a layer 3 interface 33. The layer 2 SDUs 34 are sequentially ordered from 1 to 5, and are of an unequal length. The layer 2 interface 32 packs the string of layer 2 SDUs 34 into a string of layer 2 PDUs 36. The layer 2 PDUs 36 are sequentially ordered from 1 to 4, and are all of an equal length. The string of layer 2 PDUs 36 is then sent off to the layer 1 interface 31 for transmission. A reverse process occurs at the receiver end 40, which may also be either a base station or a mobile unit, with a receiver layer 2 interface 42 unpacking a received string of layer 2 PDUs 46 into a received string of layer 2 SDUs 44. Under certain transport modes, the multi-layered protocol insists that the receiver layer 2 interface 42 present the layer 2 SDUs to the layer 3 interface 43 in order. That is, the layer 2 interface 42 must present the SDUs 44 to the layer 3 interface 43 in the sequential order of the SDUs 44, beginning with SDU 1 and ending with SDU 5. The ordering of the SDUs 44 may not be scrambled, nor may a subsequent SDU be delivered to layer 3 until all of the prior SDUs have been delivered.

In line transmissions, such a requirement is relatively easy to fulfill. In the noisy environment of wireless transmissions, however, the receiver 40, be it a base station or a mobile unit, often misses data. Some layer 2 PDUs in the received string of PDUs 46 will therefore be missing. Thus, ensuring that the layer 2 SDUs 44 are presented in order can pose a significant challenge. Wireless protocols are carefully designed to address such problems.

In general, there are two types of PDUs: control PDUs and data PDUs. Control PDUs are used by the layer 2 interfaces 16 and 26 to control data transmission and reception protocols. This is somewhat analogous to the exchange of the signaling messages 12a and 22a of the layer 3 interfaces 12 and 22. However, the layer 2 interfaces 16 and 26 do not interpret or recognize the layer 3 signaling messages 12a and 22a, whereas the layer 2 interfaces 16 and 26 do recognize layer 2 control PDUs, and do not hand layer 2 control PDUs up to the layer 3 interfaces 12 and 22. Data PDUs are used to transmit data from the upper layers, i.e., the layer 3 interfaces 12 and 22. Upon reception of data PDUs, the data contained therein is reassembled and presented to the upper layer 3 interface 12 or 22.

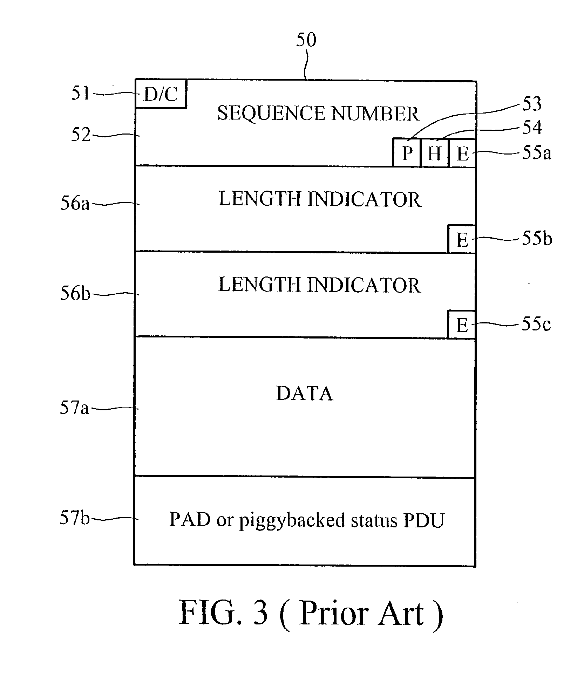

Fig.3 is a simplified block diagram of an acknowledged mode data (AMD) PDU 50, as defined in the 3GPP™ TS 25.322 specification. The AMD PDU 50 is a data PDU, and is divided into several fields, as defined by the layer 2 protocol. The first field 51 is a single bit indicating that the PDU 50 is either a data PDU ("D") or a control PDU ("C"). If the data/control bit 51 is set (i.e., equal to 1), the PDU 50 is marked as a data PDU. The second field 52 is a sequence number field. Successive PDUs 18, 28 have successively higher sequence numbers, and in this way the second station 20 can properly reassembled layer 2 PDUs 28 to form layer 2 SDUs 24. That is, if a first PDU 18 is transmitted with a sequence number equal to 536, a next PDU 18 would be transmitted with a sequence number equal to 537, and so forth. If the sequence number field 52 is 12 bits in length, the sequence number field 52 can hold a maximum value of 4095. After this maximum value of 4095, the sequence numbers in the PDUs 18, 28 rollover back to zero and begin incrementing again. A single polling bit 53 follows the sequence number field 52. When the polling bit 53 is set (i.e. "1") a status report is required in response to this PDU. Following the polling bit 53 is a single bit 54 that is reserved and is set to zero. The next bit 55a is an extension bit, and when set indicates the presence of one or more following length indicators 56a, 56b having respective extension bits 55b, 55c. Length indicators, typically either 7 bits long or 15 bits long, are used to indicate the ending positions of layer 2 SDU data within the layer 2 PDU 50. Following the length indicators is SDU data 57a and padding or a piggybacked status PDU 57b.

The amount of length indicators, data, and padding or piggybacked status PDU can vary from the example PDU illustrated, and conditions determining this are well known.

The polling bit 53 is set to indicate that the receiver of the PDU 50 (i.e., the second station 20) should respond with a status report, which comprises one or more status PDUs. The status report is used to acknowledge a receiving status of the receiver, i.e., the second station 20, to the transmitter, i.e., the first station 10. A status report enables the first station 10 to determine which PDUs 18 have been received by the second station 20, and thus which PDUs 18 may need to be retransmitted. The first station 10 sets the polling bit 53 to "1" to request the second station 20 to send a status report.

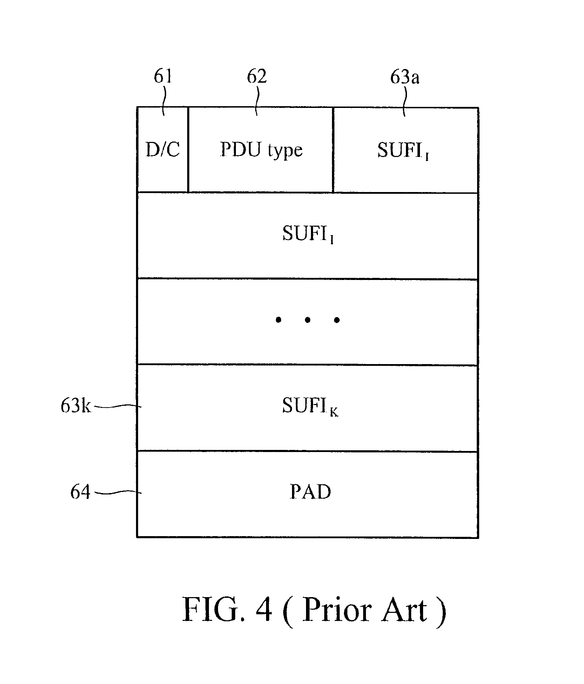

Fig.4 illustrates a typical status PDU 60. The status PDU includes a data/control bit 61, which is unset ("0") since status PDUs are control PDUs; a PDU type field, which would be set to "000" in this case; a plurality of super-fields 63a-63k of variable number; and padding 64 if or when required. When the status PDU 60 is piggybacked onto an AMD PDU, such as the AMD PDU 50 previously discussed, the data/control bit 61 becomes a reserved bit. One way that the status PDU 60 can provide an entire or partial status report is to include a list of not correctly received PDUs in the super-fields 63a-63k. Such lists typically include sequence numbers and lengths of the not correctly received PDUs.

Generally, in an acknowledged mode (AM), a receiver (such as the first or second station 10, 20) reports back to a sender (such as the first or second station 10, 20). The sender then accordingly retransmits PDUs that are negatively acknowledged and discards from its buffer PDUs that are positively acknowledged. As any PDU, a status PDU forming a whole or partial status report can get lost in the radio link. In the prior art, an estimated PDU counter (EPC) mechanism is used to detect a lost status PDU. The EPC mechanism uses one EPC timer and one EPC state variable.

The EPC timer is meant to take into account the roundtrip time between the transmission of the status report and the reception of the first retransmitted AMD PDU. Essentially, the EPC timer is started when the first status PDU of a status report is transmitted. Upon expiry of the EPC timer, an EPC state variable VR(EP) is decremented. The VR(EP) is defined as the number of AMD PDUs whose retransmission is still expected as a consequence of the transmission of the latest status report. Thus, at the end of a transmission time interval (TTI), the VR(EP) is decremented by an estimated number of AMD PDUs that should have been received during that TTI on the corresponding logical channel.

However, one of the main drawbacks of the prior art is that the estimated number of received AMD PDUs within a TTI is uncertain. Moreover, in hybrid automatic-repeat-request (HARQ) procedures used in high-speed downlink packet access (HSDPA), the VR(EP) count down process is inappropriate since a PDU may be in fact retransmitted in a medium access control (MAC) layer. Other disadvantages of the above-described system may also become apparent in certain applications.

### Summary of Invention

It is therefore a primary objective of the claimed invention to provide a method for lost status report detection to solve the above-mentioned problems.

Briefly summarized, a method for detecting a lost status report by a receiver in a communications system according to the claimed invention includes the steps of: sending a first status report to a sender, initiating a roundtrip timer, the roundtrip timer expiring, receiving a predetermined AMD PDU before all negatively acknowledged AMD PDUs identified in the first status report are received at the receiver, and thereby determining that a second status report is required.

It is an advantage of the claimed invention that the method is deterministic and adaptive to the transmission conditions of the communications system.

It is an advantage of the claimed invention that the method improves transmission throughput.

These and other objectives of the claimed invention will no doubt become obvious to those of ordinary skill in the art after reading the following detailed description of the preferred embodiment that is illustrated in the various figures and drawings.

### Brief Description of Drawings

Fig.1 is a block diagram of a conventional three-layer communications protocol.
Fig.2 is a simplified diagram of a conventional transmission/reception process from a layer 2 perspective.
Fig.3 is a simplified block diagram of a conventional AMD PDU.
Fig.4 is a simplified block diagram of a conventional status PDU.
Fig.5 is a schematic diagram of a present invention method of detecting a missing status report.
Fig.6 is a flowchart of a present invention method of detecting a missing status report.

### Detailed Description

In the following description, a communications protocol as disclosed in the 3GPP™ specification TS 25.322, V4.9.0, is used by way of example. However, it is noted that any wireless communications protocol that packs layer 3 data into layer 2 protocol data units (PDUs) may benefit from the disclosure contained herein. It is further noted that senders and receivers in the following detailed description can include cellular/mobile telephones, personal data assistants (PDAs), personal computers (PCs), base stations, networks, or any other device that utilizes a 3-layered wireless communications protocol.

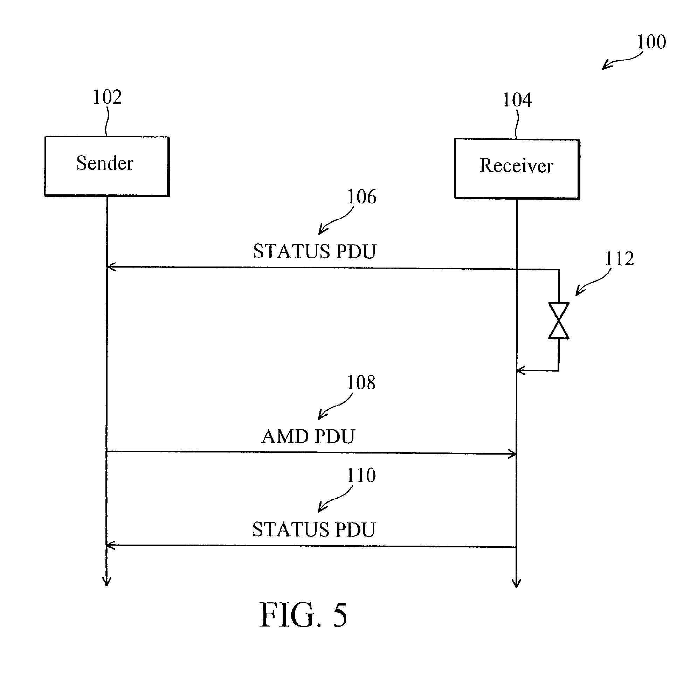

Please refer to Fig.5, which illustrates a schematic diagram of a method according to the present invention. In Fig.5 advancing time is in the downward direction. A communications system 100 includes a sender 102 and a receiver 104, which can be devices such as the first and second stations 10, 20 of Fig.1 communicating through a radio link.

As shown in Fig.5, the receiver 104 sends a first status report comprising a single status PDU 106. While a status report can have one or a plural number of status PDUs, one is used here for example only. The receiver 104 sends the status PDU 106 in response to a received acknowledged mode data (AMD) PDU having a polling bit set (see Fig.3, polling bit 53), the receiver 104 detecting a missing AMD PDU, detecting expiration of a periodic status timer (known as "Timer_Status_Periodic"), or other similar or well-known event. The status report could also be triggered by another condition different from those described depending on future advancements in the art.

According to the present invention, after sending the first status report, the receiver 104 initializes or starts a roundtrip timer, schematically illustrated as 112 in Fig.5. The duration of the roundtrip timer 112 is set at least to a sum of a roundtrip propagation delay, a processing time of the sender 102, and a processing time of the receiver 104. This is an estimation, a measured value, or a predefined value that is determined by an upper layer. The processing times at the sender 102 and receiver 104 depend on how quickly these devices can interpret, assemble, disassemble, and process PDUs. The roundtrip timer 112 is considered active after it is started and before it expires. In the preferred embodiment the roundtrip timer 112 is located in the receiver 104.

While the roundtrip timer 112 is active, the receiver 104 receives AMD PDUs normally as if the first status report has not been sent. After the roundtrip timer 112 expires and before all the negatively acknowledged AMD PDUs identified in the first status report are received, the receiver 104 awaits or detects for an AMD PDU 108 of predetermined type. Predetermined type simply means an AMD PDU that is any of the following: an AMD PDU not negatively acknowledged in the first status report, an AMD PDU with a polling bit set (see Fig.3, polling bit 53), the last negatively acknowledged AMD PDU, or a negatively acknowledged AMD PDU with a sequentially earlier negatively acknowledged AMD PDU in the first status report missing. That is, the receiver 104 can be configured to be responsive to any one, two, three, or four of these types of PDUs. Naturally, the receiver 104 can continue to perform normal actions or processes while detecting for the predetermined AMD PDU 108, so that the receiver 104 need not be in a suspended state. However, the receiver 104 can delay sending other status reports while the roundtrip timer 112 is active. Should the AMD PDU 108 of a predetermined type arrive from the sender 102 after expiry of the roundtrip timer 112 (as is the case shown in Fig.5), the receiver 104 accordingly determines that a second status report is required.

Except for the second status report triggered by a predetermined type of AMD PDU 108 described above, if a third status report is triggered after the roundtrip timer 112 expires by any other causes, such as expiration of a periodic status timer, the receiver 104 holds or delays the third status report until the monitoring process of the first status report is terminated or a second status report is triggered. Of course, in the case that a second status report is triggered, the third status report and the second status report are combined as one.

When the receiver 104 determines that a second status report is required, the receiver 104 sends an updated status report comprising one or more status PDUs, exemplified by the status PDU 110. Before sending the updated status report, the receiver 104 can determine whether such a status report is prohibited. In the case where a status report is prohibited, the receiver 104 can take another course of action such as waiting until such prohibition is revoked or informing an upper or lower layer. If instead of determining that a second status report is required, the receiver 104 receives all negatively acknowledged AMD PDUs identified in the first status report, the receiver 104 determines that the first status report was received by the sender 102. Accordingly the receiver 104 ceases monitoring the first status report, stops or disables the roundtrip timer 112, sends any delayed third status report that had been triggered, and returns to normal operation.

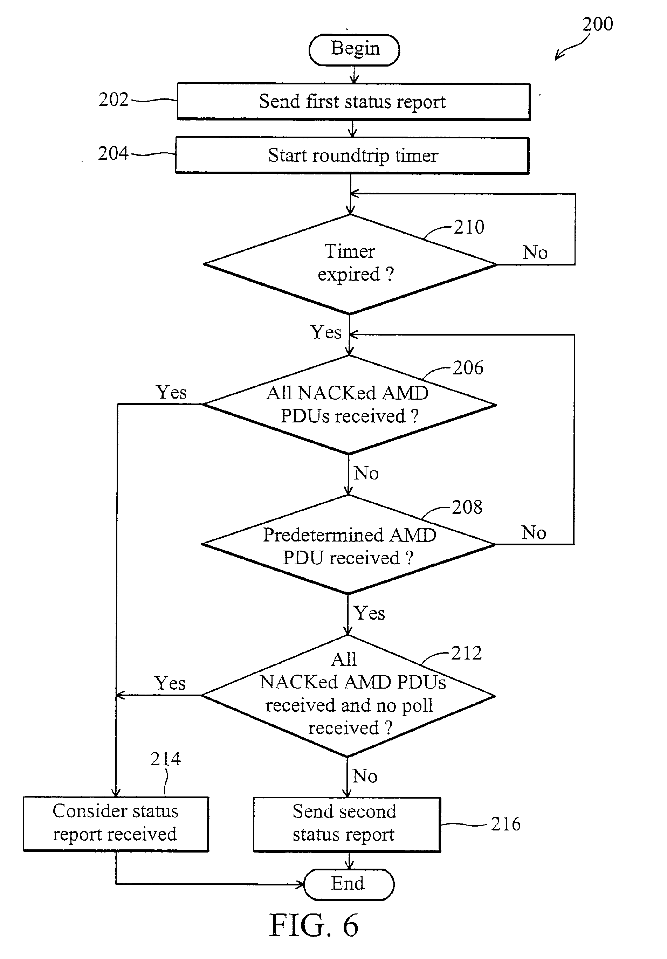

Fig.6 illustrates a simplified flowchart of a method 200 according to the present invention as executed at the receiver 104. First, in step 202, the receiver 104 sends a first status report (such as PDU 60 in Fig.4, or PDU 106 in Fig.5) to the sender 102. Then, the receiver 104 starts the roundtrip timer 112 in step 204. The receiver 104 checks for expiry of the roundtrip timer 112 in step 210. Step 210 is checked repeatedly until expiry of the timer 112. Subsequently, the receiver 104 determines whether all negatively acknowledged AMD PDUs listed in the first status report have been received in step 206. If all such AMD PDUs have been received, step 214 is performed, and the receiver 104 considers the first status report to be received successfully by the sender 102 and the method 200 ends. If all the negatively acknowledged AMD PDUs have not been received, step 208 determines whether a predetermined AMD PDU (PDU 108, Fig.5) has been received, wherein the types of predetermined AMD PDUs are described above. If no predetermined AMD PDU has been received, the receiver 104 goes back to step 206. If such a predetermined type of PDU has been received, the receiver 104 checks in step 212 whether all negatively acknowledged AMD PDUs listed in the first status report have been received and no Poll has been received after the first status report is sent out at step 202. If the checking result is true, step 214 is performed and the receiver 104 considers the first status report as being received successfully by the sender 102 and the method 200 ends. Otherwise, if at least one negatively acknowledged AMD PDU listed in the first status report has not been received or a Poll has been received after step 202, the receiver 104 sends a second status report (e.g. status PDU 110, Fig.5) in step 216 and the method 200 ends. It can be seen that the method 200 ends with a second status report when at least one negatively acknowledged AMD PDU has not been received and a PDU of predetermined type has been received, and that the method 200 ends without a second status report when all negatively acknowledged AMD PDUs have been received. As a result, the method 200 as executed by the receiver 104 provides one implementation of the present invention.

In another embodiment of the method 200, the steps need not be in the order shown in Fig.6. For example, the steps 206 and 208 could easily be reversed. In addition, another embodiment could have any or all steps executed in a device other than the receiver 104. Furthermore, some steps, such as step 214, can be omitted to suit a particular application. It should be understood that, though the method 200 has a beginning and an ending, the receiver 104 is not prevented from undertaking other operations during execution of the method 200. Furthermore, if step 216 is performed to send a second status report, the method 200 can be iterated. In other words, after step 216, the receiver 104 performs step 204 and treats the second status report as the first status report of the next iteration.

The method according to the present invention can be stored in and executed by hardware such as a microcontroller, a processor, a central processing unit (CPU), a computer, a digital counter, or a logic circuit; by software such as program instructions, executable code, or firmware; or by a combination of hardware and software.

In contrast to the prior art, the present invention determines that an updated status report is required when an AMD PDU not negatively acknowledged in the first status report, an AMD PDU with a polling bit set, the last negatively acknowledged AMD PDU, or a negatively acknowledged AMD PDU with a sequentially earlier negatively acknowledged AMD PDU in the first status report missing is received after the expiry of a roundtrip timer and before all the negatively acknowledged AMD PDUs identified in the first status report are received. As such, the present invention provides a deterministic way of detecting a lost status report, with one of many advantages being improved transmission throughput.

Those skilled in the art will readily observe that numerous modifications and alterations of the device may be made while retaining the teachings of the invention. Accordingly, the above disclosure should be construed as limited only by the metes and bounds of the appended claims.

## Claims

1. A method for detecting a lost status report by a receiver in a communications system, the communications system including a receiver and a sender wherein data is communicated by acknowledged mode data (AMD) protocol data units (PDUs), the method comprising:
sending a first status report to the sender in response to a first trigger;
initiating a roundtrip timer;
after expiry of the roundtrip timer, receiving a predetermined AMD PDU before all negatively acknowledged AMD PDUs identified in the first status report are received at the receiver; and
determining that a second status report is required.

2. The method of claim 1, wherein the step of determining that a second status report is required further comprises sending the second status report to the sender.

3. The method of claim 1, wherein determining that a second status report is required further comprises:
determining that a status report is not prohibited; and
sending the second status report to the sender.

4. The method of claim 3, wherein determining that a status report is not prohibited is performed by checking a status report prohibit timer.

5. The method of claim 1, wherein duration of the roundtrip timer is set at least to a sum of a propagation delay and at least a processing time of the sender or the receiver.

6. The method of claim 1, wherein duration of the roundtrip timer is set to at least a sum of the roundtrip propagation delay, the processing time of the sender, and the processing time of the receiver.

7. The method of claim 1, wherein the predetermined AMD PDU is an AMD PDU not negatively acknowledged in the first status report.

8. The method of claim 1, wherein the predetermined AMD PDU is an AMD PDU with a polling bit set.

9. The method of claim 1, wherein the predetermined AMD PDU is the last negatively acknowledged AMD PDU in the first status report.

10. The method of claim 1, wherein the first trigger is detecting an expiration of a periodic timer.

11. The method of claim 1, wherein the first trigger is receiving an AMD PDU with a polling bit set.

12. The method of claim 1, wherein the first trigger is detecting at least a missing AMD PDU.

13. The method of claim 1, wherein the first status report is current and the second status report is subsequent, the method further comprising iteratively repeating all steps taking the subsequent status report as the first status report.

14. The method of claim 1, wherein the second status report contains an updated receiving status of the receiver.

15. The method of claim 1, wherein sending a first status report to the sender in response to a first trigger further comprises:
delaying sending a third status report to the sender in response to a second trigger.

16. The method of claim 15, wherein the second trigger is an expiration of a periodic timer.

17. The method of claim 15, wherein after determining that a second status report is required:
receiving all negatively acknowledged AMD PDUs identified in the first status report;
determining that the first status report is received by the sender; and
sending the third status report in response to the delayed second trigger.
